# EUROPEAN PATENT APPLICATION

(11) **EP 4 815 540 A1**
(43) Date of publication of application: **30.09.2026**
(21) Application number: 23959157.1
(22) Date of filing: 22.11.2023
(51) Int. Cl.: H04W 24/02

(54) **PERFORMANCE MONITORING METHOD, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: RGTH
(86) International application number: PCT/CN2023/133311
(87) International publication number: WO 2025/107183

(57) **Abstract**

The present application relates to a performance monitoring method, a first device, a second device, a chip, a computer-readable storage medium, a computer program product, a computer program, and a communication system. The method comprises: a first device receives first data from a second device, wherein the first data is used for the first device to determine a first model, and the first model is used for the first device to perform performance monitoring related to a first task. According to embodiments of the present application, the performance monitoring of the first task does not require transmission of information of a model for executing the first task, and does not require transmission of a large amount of data such as an intermediate processing result and a measurement result in the process of executing the first task, thereby avoiding the privacy and model privatization problems, and reducing signaling overhead.

## Description

### TECHNICAL FIELD

The present application relates to the field of communications, and more particularly, to a performance monitoring method, a first device, a second device, a chip, a computer-readable storage medium, a computer program product, a computer program, and a communication system.

### BACKGROUND

Monitoring performance of wireless communication solutions is conducive to analyzing and optimizing network quality and performance. An entity performing the performance monitoring can be a network or a terminal, and during the performance monitoring process, numerous additional data transmission processes may be introduced, such as transmitting data obtained through measurements, intermediate processing results from tasks collaboratively performed by the network and the terminal, and information about computational models used to perform tasks, which may cause privacy issues and increase transmission overhead.

### SUMMARY OF THE INVENTION

Embodiments of the present application provide a performance monitoring method, which can circumvent privacy issues arising from information transmission and reduce transmission overhead.

The embodiments of the present application provide a performance monitoring method, including:
receiving, by a first device, first data from a second device; where the first data is used by the first device to determine a first model, and the first model is used by the first device to perform performance monitoring related to a first task.

The embodiments of the present application provide a performance monitoring method, including:
transmitting, by a second device, first data to a first device; where the first data is used by the first device to determine a first model, and the first model is used by the first device to perform performance monitoring related to a first task.

The embodiments of the present application provide a first device, including:
a first communication module, configured to receive first data from a second device; where the first data is used to determine a first model, and the first model is used to perform performance monitoring related to a first task.

The embodiments of the present application provide a second device, including:
a second communication module, configured to transmit first data to a first device; where the first data is used by the first device to determine a first model, and the first model is used by the first device to perform performance monitoring related to a first task.

The embodiments of the present application provide a first device, including: a transceiver, a processor, and a memory. The memory is configured to store a computer program, the transceiver is configured to communicate with other devices, and the processor is configured to call the computer program stored in the memory and run the computer program to enable the first device to perform the above performance monitoring method.

The embodiments of the present application provide a second device, including: a transceiver, a processor, and a memory. The memory is configured to store a computer program, the transceiver is configured to communicate with other devices, and the processor is configured to call the computer program stored in the memory and run the computer program to enable the second device to perform the above performance monitoring method.

The embodiments of the present application provide a chip configured to implement the above performance monitoring methods.

Specifically, the chip includes: a processor configured to call a computer program from a memory and run the computer program to enable a device equipped with the chip to perform the above performance monitoring methods.

The embodiments of the present application provide a computer-readable storage medium configured to store a computer program, and the computer program, when executed by a device, enables the device to perform the above performance monitoring methods.

The embodiments of the present application provide a computer program product including computer program instructions, and the computer program instructions enable a computer to perform the above performance monitoring methods.

The embodiments of the present application provide a computer program, and the computer program, when executed on a computer, enables the computer to perform the above performance monitoring methods.

The embodiments of the present application provide a communication system, and the communication system includes a first device and a second device configured to perform the above performance monitoring method.

In the embodiments of the present application, a second device transmits first data to a first device, enabling the first device to determine a first model and use the first model to perform performance monitoring for a first task. Therefore, it is unnecessary to transmit a model used to perform the first task or to transmit large amounts of data such as intermediate processing results and measurement results generated while performing the first task, which can circumvent privacy and model privatization issues and also reduce signaling overhead.

### BRIEF DESCRIPTION OF THE DRAWINGS

FIG. 1 is a schematic diagram illustrating a communication system based on the embodiments of the present application.
FIG. 2 is a schematic diagram illustrating an artificial intelligence (AI)-based CSI compression feedback solution in the embodiments of the present application.
FIG. 3 is a schematic diagram illustrating an AI-based channel estimation solution in the embodiments of the present application.
FIG. 4 is a schematic diagram illustrating an AI-based positioning solution in the embodiments of the present application.
FIG. 5 is a schematic diagram illustrating an AI-based beam management solution in the embodiments of the present application.
FIG. 6 is a schematic flowchart of a performance monitoring method according to an embodiment of the present application.
FIG. 7 is a schematic flowchart illustrating a performance monitoring method according to another embodiment of the present application.
FIG. 8 is a schematic diagram illustrating an application example of a performance monitoring method according to the embodiments of the present application.
FIG. 9 is a schematic diagram illustrating an example of third data in the performance monitoring method according to the embodiments of the present application.
FIG. 10 is a schematic diagram illustrating an example of third data in the performance monitoring method according to the embodiments of the present application.
FIG. 11 is a schematic block diagram illustrating a first device according to an embodiment of the present application.
FIG. 12 is a schematic block diagram illustrating a second device according to an embodiment of the present application.
FIG. 13 is a schematic block diagram illustrating a communication device according to the embodiments of the present application.
FIG. 14 is a schematic block diagram illustrating a chip according to the embodiments of the present application.
FIG. 15 is a schematic block diagram illustrating a communication system according to the embodiments of the present application.

### DETAILED DESCRIPTION OF EMBODIMENTS

Technical solutions in the embodiments of the present application will be described below with reference to the accompanying drawings in the embodiments of the present application.

The technical solutions of the embodiments of the present application may be applied to various communication systems, such as: a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), wireless fidelity (WiFi), a 5th-generation (5G) communication system, and other communication systems.

Generally speaking, traditional communication systems support a limited number of connections, which is easy to be implemented. However, with the development of the communication technology, mobile communication systems will not only support traditional communications, but also support, for example, device-to-device (D2D) communication, machine-to-machine (M2M) communication, machine type communication (MTC), vehicle-to-vehicle (V2V) communication, or vehicle-to-everything (V2X) communication. The embodiments of the present application may also be applied to these communication systems.

In an implementation, the communication system in the embodiments of the present application may be applied to a carrier aggregation (CA) scenario and a dual connectivity (DC) scenario, and may also be applied to a standalone (SA) network deployment scenario.

In an implementation, the communication system in the embodiments of the present application may be applied to an unlicensed spectrum, where the unlicensed spectrum may also be considered as a shared spectrum. Alternatively, the communication system in the embodiments of the present application may be applied to a licensed spectrum, where the licensed spectrum may be considered as an unshared spectrum.

In the embodiments of the present application, various embodiments are described in conjunction with a network device and a terminal device. The terminal device may also be referred to as a user equipment (UE), an access terminal, a user unit, a user station, a mobile station, a mobile terminal, a remote station, a remote terminal, a mobile device, a user terminal, a terminal, a wireless communication device, a user agent, a user apparatus, or the like.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, an in-vehicle device, a wearable device, a terminal device in a next generation communication system such as an NR network, a terminal device in a future evolved public land mobile network (PLMN) network, or the like.

In embodiments of the present application, the terminal device may be deployed on land, including indoor or outdoor, handheld, wearable, or in-vehicle; the terminal device may also be deployed on water (e.g., on a steamship), and the terminal device may also be deployed in air (e.g., on an aircraft, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in a smart home, or the like.

As an example but not a limitation, in the embodiments of the present application, the terminal device may also be a wearable device. The wearable device, also known as a wearable smart device, is a general term for wearable devices developed by performing the intellectualized design on daily wear by applying wearable technologies, such as glasses, gloves, watches, clothing and shoes. The wearable device is a portable device that is worn directly on a body, or integrated into clothes or accessories of users. The wearable device not only is a hardware device, but also implements powerful functions by software support as well as data interaction or cloud interaction. Generalized wearable smart devices include devices that are fully functional, large in size, and capable of implementing full or partial functions without relying on smart phones, such as smart watches or smart glasses, as well as devices that only focus on a certain type of application function and need to be used in conjunction with other devices such as a smart phone, for example various smart bracelets and smart jewelry that monitor physical signs.

In embodiments of the present application, the network device may be a device used for communicating with a mobile device. The network device may be an access point (AP) in the WLAN, an evolutional node B (eNB or eNodeB) in LTE, a relay station or an access point, an in-vehicle device, a wearable device, a network device (gNB) in an NR network, a network device in a future evolved PLMN, a network device in an NTN network.

As an example but not a limitation, in the embodiments of the present application, the network device may have mobile characteristics. For example, the network device may be a device which is mobile. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station deployed on land, water, or other places.

In the embodiments of the present application, the network device may provide services for a cell, and the terminal device communicates with the network device through a transmission resource (e.g., a frequency domain resource, or a spectrum resource) used by the cell. The cell may be a cell corresponding to the network device (e.g., a base station). The cell may belong to a macro base station, or may belong to a base station corresponding to a small cell. The small cell here may include: a metro cell, a micro cell, a pico cell, a femto cell, or the like. The small cell have characteristics of small coverage ranges and low transmission power, which are applicable for providing a data transmission service with high-speed.

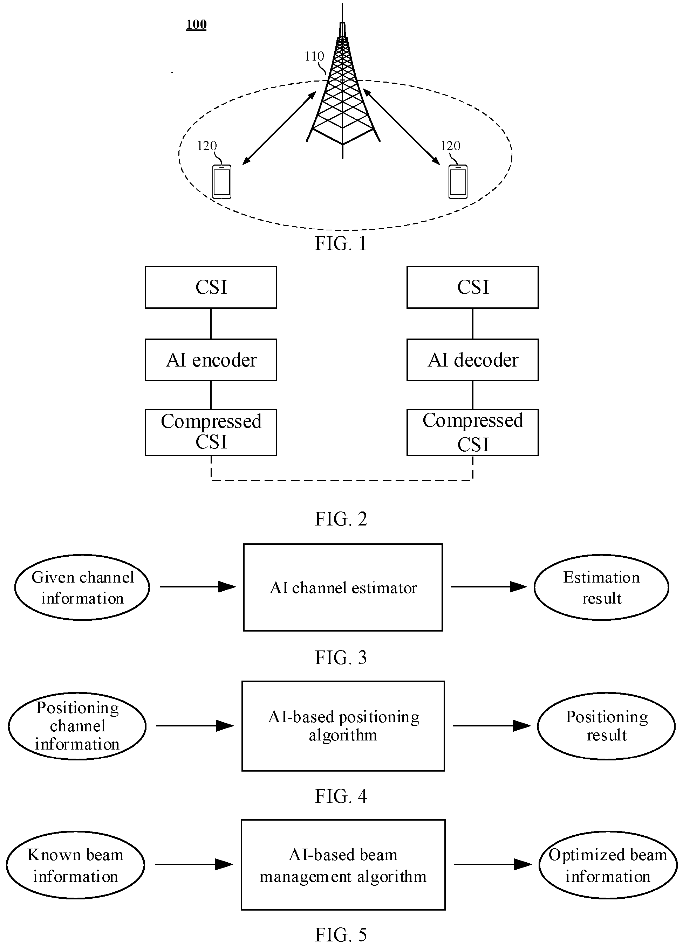

FIG. 1 exemplarily illustrates a communication system 100. The communication system includes one network device 110 and two terminal devices 120. In an implementation, the communication system 100 may include multiple network devices 110, and each of which may have a coverage area in which other number of terminal devices 120 are included, which is not limited in the embodiments of the present application.

In an implementation, the communication system 100 may further include other network entities, such as a mobility management entity (MME), and an access and mobility management function (AMF), which is not limited in the embodiments of the present application.

Here, the network device may further include an access network device and a core network device. That is, a wireless communication system further includes multiple core networks used for communicating with the access network device. The access network device may be an evolutional node B (abbreviated as eNB or e-NodeB), a macro base station, a micro base station (also known as a "small cell"), a pico base station, an access point (AP), a transmission point (TP), or a next-generation node B (gNodeB) in a long-term evolution (LTE) system, a next radio (NR) system, or an authorized auxiliary access long-term evolution (LAA-LTE) system.

It should be understood that a device with the communication function in a network/system in the embodiments of the present application may be referred to as a communication device. Taking the communication system illustrated in FIG. 1 as an example, the communication device may include a network device and a terminal device that both with a communication function. The network device and the terminal device may be specific devices in the embodiments of the present application, and details are not repeated here. The communication device may further include other devices in the communication system, such as a network controller or a mobility management entity, and other network entities, which is not limited in the embodiments of the present application.

It should be understood that terms "system" and "network" are often used interchangeably herein. The term "and/or" herein is only an association relationship to describe associated objects, indicating that there may be three kinds of relationships; for example, "A and/or B" may represent three cases where: A exists alone, both A and B exist, and B exist alone. In addition, a character "/" herein generally indicates that the associated objects before and after this character are in an "or" relationship.

It should be understood that, "indicate" mentioned in the embodiments of the present application may mean a direct indication, an indirect indication, or may mean that there is an association relationship. For example, A indicating B may mean that A directly indicates B, and for example, B may be acquired by A; alternatively, A indicating B may mean that A indirectly indicates B, and for example, A indicates C, and B may be acquired by C; alternatively, A indicating B may mean that there is an association relationship between A and B.

In the description in the embodiments of the present application, the term "correspond" may mean that there is a direct correspondence or an indirect correspondence between the two, or may mean that there is an association relationship between the two, or may mean a relationship of indicating and being indicated, or a relationship of configuring and being configured, or the like.

To facilitate understanding of the technical solutions of the embodiments of the present application, the relevant technologies of the embodiments of the present application are described below. The following relevant technologies, as optional solutions, may be arbitrarily combined with the technical solutions of the embodiments of the present application, and those combined solutions all fall within the protection scope of the embodiments of the present application.

### (1) Artificial intelligence (AI)-based wireless communication solutions

Currently, AI-based solutions are increasingly applied in wireless communication systems. For example, channel-state information (CSI) feedback is implemented based on AI. As illustrated in FIG. 2, AI-based CSI information compression feedback is implemented through the introduction of the AI encoder and AI decoder. As another example, a channel estimation problem can be solved based on AI. As illustrated in FIG. 3, a high-performance estimation of a given channel is implemented through an AI channel estimator. As another example, a positioning problem can be solved based on AI. As illustrated in FIG. 4, based on positioning channel information, a high-precision positioning result is obtained by using an AI-based positioning algorithm. As yet another example, a beam management problem can be solved based on AI. As illustrated in FIG. 5, based on known beam information, preferred or more refined beam information, or prediction of beam information for future moments in time is obtained by using an AI-based beam management algorithm.

In the above AI/machine learning (ML)-based wireless communication solutions, there are two main categories of solutions. One category is single-ended solutions, for example, AI/ML solutions are deployed entirely at the UE side or entirely at the network side. For example, models related to beam management are deployed at either the UE side or the network side, or models related to positioning are deployed at either the UE side or the network side. The other category is dual-ended solutions, which require cooperation between the UE and the network to complete performing of a specific use case. For example, AI/ML-based CSI compression and recovery solutions are a typical dual-ended solution. Furthermore, similar AI/ML-based dual-ended solutions may further include, for example, AI/ML-based modulation and demodulation solutions, AI/ML-based source (or channel) encoding and decoding solutions, and AI/ML-based transmitter and receiver matching designs. The common feature of the above dual-ended solutions is that the UE side and the network side respectively need to use models deployed at the UE side and the network side (and the models at both sides shall also be capable of being used in cooperation with each other), to jointly complete functions related to specific wireless transmissions. The model at the UE side needs to be used jointly with the model at the network side; otherwise, issues such as performance degradation or operational failure may occur.

### (2) Performance monitoring of AI/ML-based wireless communication solutions

In current research, performance evaluation of AI/ML solutions is primarily defined based on inference performance of the AI/ML solutions. For example, for CSI compression and recovery solutions, the achievable CSI recovery accuracy of a specific AI/ML solution under a given compressed feedback bit condition can be used as a performance evaluation metric for this solution. For example, difference or similarity between ideal CSI information or the CSI information to be compressed and CSI information obtained through compression and recovery can be used as a performance evaluation metric. For CSI prediction solutions, similar to CSI compression and recovery solutions, the achievable CSI prediction accuracy of a specific AI/ML solution can be used as a performance evaluation metric for this solution, for example, using difference or similarity between ideal CSI information or target CSI information and CSI information for evaluation. In the above solutions, difference evaluation between CSI information is, for example, normalized mean square error (NMSE) o a mean squared error (MSE) evaluation. The similarity evaluation between CSI information is, for example, evaluation based on GCS, SGCS, or the like. As another example, in beam management solutions, it is necessary to evaluate the prediction performance of beams (e.g., a measurement error relative to the ideal beam) to determine whether an AI/ML solution is usable. In positioning solutions, it is also necessary to evaluate the positioning accuracy or the accuracy of some intermediate results of positioning algorithms (e.g., reference signal time difference (RSTD) estimation, time of arrival (TOA) estimation) to determine whether relevant solutions operate properly. Furthermore, in some of the above solutions, such as CSI-related solutions, beam prediction-related solutions, or encoding/decoding-related solutions, the system capacity and throughput performance brought by the adoption of an AI/ML solution may also serve as evaluation metrics for performance evaluation of the corresponding solutions.

For the above performance monitoring of the AI/ML wireless communication solutions, it should also be noted that the entity performing the performance monitoring may be categorized into UE-side monitoring and network-side monitoring. The focus of the UE-side monitoring is that the UE can complete calculations of the performance monitoring independently, to obtain performance monitoring results or some results associated with the performance monitoring. The focus of the network-side monitoring is that the performance monitoring is completed by the network side, where the network side calculates and obtains results of the performance monitoring or some results associated with the performance monitoring.

The network-side monitoring requires the UE to transmit a large amount of information used for performance monitoring to the network (e.g., label data that that can only be obtained through measurement at the UE side, and data output by the UE side that serves as input for the network-side model). That is, many additional data transmission processes are introduced during performance monitoring. Instead, the UE-side monitoring allows the UE to complete performance monitoring for some corresponding tasks and models locally, thereby circumventing unnecessary data transmission and signaling overhead for performance monitoring while completing performance monitoring of specific tasks and models.

For UE-side performance monitoring, taking CSI feedback tasks as an example, under the assumption of a dual-ended model, it is necessary to obtain, at the UE side, the output of a CSI recovery model used at the network side as evaluation data. However, the problem here is that in a dual-ended model, one model is often proprietary to the UE side, and the other is proprietary to the network side. For example, a CSI generation model is proprietary to the UE side, and a CSI recovery model is proprietary to the network side. Due to reasons such as model privatization and model privacy, if the UE side cannot obtain a network-side model of the dual-ended model from the network side, the UE side lacks a complete dual-ended model and consequently lacks the complete output result of the dual-ended model for UE-side performance monitoring of the CSI compression feedback task. A similar situation also exists when a single-ended model at the network side is intended for UE-side performance monitoring.

The technical solutions of the embodiments of the present application can solve at least one of the above issues.

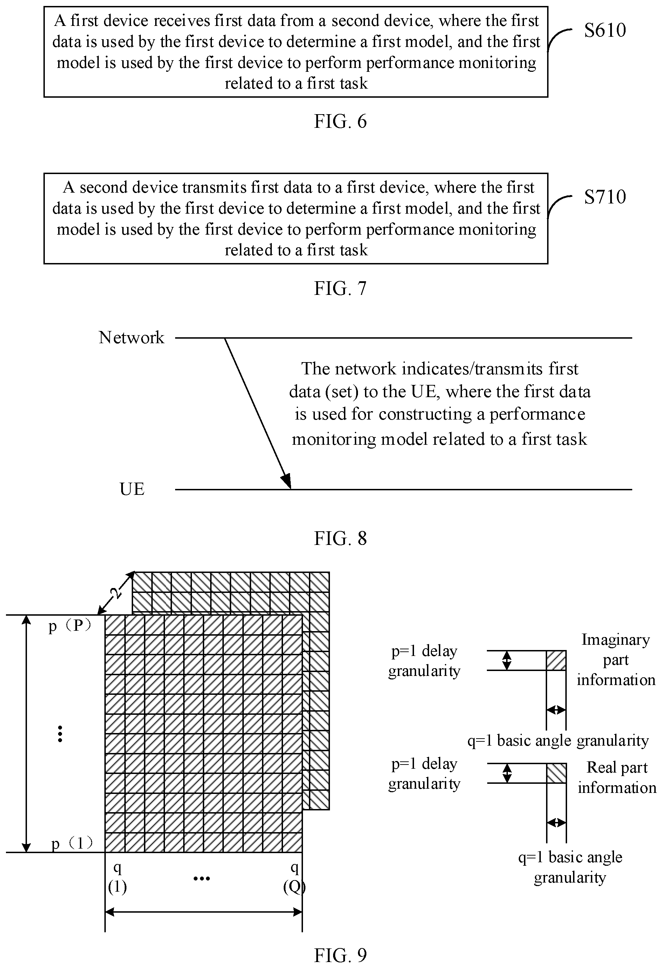

FIG. 6 is a schematic flowchart of a performance monitoring method according to an embodiment of the present application. Optionally, the method may be applied to a system illustrated in FIG. 6, but is not limited thereto. The method includes the following step.

In S610, a first device receives first data from a second device; where the first data is used by the first device to determine a first model, and the first model is used by the first device to perform performance monitoring related to a first task.

Corresponding to the above method, FIG. 7 is a schematic flowchart of a performance monitoring method according to another embodiment of the present application. Optionally, the method may be applied to a system illustrated in FIG. 7, but is not limited thereto. The method includes the following step.

In S710, a second device transmits the first data to a first device; where the first data is used by the first device to determine a first model, and the first model is used by the first device to perform performance monitoring related to a first task.

In the embodiments of the present application, the first device may be any device in a communication system. Exemplarily, the first device may be a network device or a terminal device. The second device may be any device in the communication system other than the first device. Exemplarily, the second device may be a network device or a terminal device. That is, application scenarios of the embodiments of the present application may be one of the following scenarios.

In scenario 1, the first device is a terminal device, and the second device is a network device.

In scenario 2, the first device is a network device, and the second device is a terminal device.

In scenario 3, the first device is a first terminal device, and the second device is a second terminal device.

In scenario 4, the first device is a first network device, and the second device is a second network device.

In embodiments of the present application, the first model is used by the first device to perform performance monitoring related to the first task. Based on this, the first model may be referred to as a performance monitoring model. Here, the performance monitoring related to the first task may include obtaining performance monitoring metrics for the first task. The performance monitoring metrics may include evaluation metrics for performance of the first task, or evaluation metrics for system performance related to the first task. Here, the evaluation metrics for the performance of the first task may be, for example, the processing precision and accuracy of the first task. The evaluation metrics for system performance related to the first task may include, for example, system capacity, throughput performance metrics, etc., when the first task is being performed.

Exemplarily, the first task may include a model-based wireless communication solution, in this case, the performance monitoring related to the first task may be understood as performance monitoring for the model, for example, obtaining evaluation metrics for model performance or obtaining evaluation metrics for system performance related to the model. The model mentioned here may be an AI/ML-based model or another computational model.

For example, the first task may be the AI-based CSI information compression feedback, the channel estimation implemented via the AI channel estimator, the AI-based positioning solution, or the AI-based beam management solution described in the above relevant technologies.

Optionally, the first model may be an AI-based model, such as a machine learning model, a fully connected network model, a convolutional neural network model, or a recurrent neural network model. In addition, the first model may be a model that directly outputs performance monitoring metric(s), or a model that outputs other information used to determine performance monitoring metric(s).

Optionally, that the first data is used to determine the first model may refer to that the first data is used to indicate the first model, for example, indicating specific parameters of the first model (e.g., a network structure, a weighting factor). Alternatively, the first data may be used to indicate data related to the construction of the first model, which may be specifically configured according to the function of the first model. It should be noted that the first data may include one or more pieces of data. Therefore, in some descriptions, the first data may also be referred to as a first data set.

Optionally, the first data may be transmitted through one or more of the following manners (or carried in one or more of the following messages/channels): a broadcast message, a radio resource control (RRC) message, a MAC control element (MAC CE), a message in the random access procedure, downlink control information (DCI), uplink control information (UCI), a physical downlink control channel (PDCCH), a physical uplink control channel (PUCCH), a physical downlink shared channel (PDSCH), a physical uplink shared channel (PUSCH), an AI/ML-dedicated channel, or capability indication information.

In an example where the first device is a terminal device and the second device is a network device, the network device can transmit the first data to the terminal device via the following manners: a broadcast message such as a master information block (MIB), system information block type1 (SIB1), or system information block type x (SIBx); an RRC message; a MAC CE; DCI; a downlink message in the random access procedure, such as message B (MsgB), message 2 (Msg2), or message 4 (Msg4); a PDCCH; a PDSCH; an AI/ML-dedicated downlink channel; or capability indication from the network side.

Optionally, after the above step S610, the performance monitoring method may further include: determining, by the first device, the first model based on the first data; and performing, by the first device, performance monitoring related to the first task based on the first model.

Based on the above method, the second device transmits the first data to the first device, enabling the first device to determine the first model and use the first model to perform performance monitoring for the first task. Therefore, it is unnecessary to transmit a model used to perform the first task or large amounts of data such as intermediate processing results and measurement results generated while performing the first task, which can circumvent privacy and model privatization issues and also reduce signaling overhead.

In some embodiments, the first task includes a wireless communication solution based on a second model in the second device. That is, the performance monitoring related to the first task may include performance monitoring for the second model in the second device. Based on the methods in the embodiments of the present application, it is unnecessary to transmit the second model, thus circumventing privacy and model privatization issues caused by the transmission of the second model.

In some embodiments, the aforementioned wireless communication solution is implemented based on the second device using the second model. Optionally, the aforementioned wireless communication solution may be implemented based solely on the second device using the second model, or it may be implemented based on the first device using a third model and the second device using the second model.

Specifically, the aforementioned wireless communication solution may be a single-ended solution performed by the second device or a dual-ended solution performed by both the first device and the second device.

For example, in a case where the first device is a terminal device and the second device is a network device, the aforementioned wireless communication solution may be a beam prediction solution or a positioning solution implemented by the network device using the second model. By adopting the embodiments of the present application, it is unnecessary for the terminal device to transmit large amounts of data (e.g., data obtained through measurements) to the network device, and it is also unnecessary for the network device to transmit the second model to the terminal device. Instead, the terminal device determines the first model using the first data and implements performance monitoring for the solution based on the first model and local data of the terminal device.

As another example, in a case where the first device is a terminal device and the second device is a network device, the aforementioned wireless communication solution may be a compressed feedback solution for CSI information, implemented by the terminal device using the third model (encoder) and the network device using the second model (decoder). By adopting the embodiments of the present application, it is unnecessary for the terminal device to transmit large amounts of data (e.g., data obtained through measurements and data output by the encoder of the terminal device) to the network device, and it is also unnecessary for the network device to transmit the decoder to the terminal device. Instead, the terminal device determines the first model using the first data and implements performance monitoring for the solution based on the first model and local data of the terminal device.

As yet another example, in a case where the first device is a network device and the second device is a terminal device, the aforementioned wireless communication solution may be a compressed feedback solution for CSI information, implemented by the terminal device using the second model (encoder) and the network device using the third model (decoder). By adopting the embodiments of the present application, it is unnecessary for the terminal device to transmit the encoder to the network device, it is also unnecessary to transmit data obtained by the terminal device based on measurements or data output by the encoder in the terminal device to the network device. Instead, the network device determines the first model using the first data and implements performance monitoring for the solution based on the first model and local data of the network device.

In some embodiments, the first model includes a model having the same function as the second model and/or a model used for outputting a performance monitoring metric.

Specifically, in an implementation, the first model may include the model having the same function as the second model. The first device may run the first model to obtain processing information from the first model and obtain performance monitoring metrics based on the processing information from the first model.

For example, the first device is deployed with an encoder that outputs a bitstream based on original channel information, and the second device is deployed with a second decoder (the second model) that outputs channel information based on a bitstream. The first device and the second device implement CSI compressed feedback using the encoder and the second decoder. Based on this, the first model may be a first decoder that outputs channel information based on the bitstream. Here, the second decoder and the first decoder have the same function, but in fact, the second decoder and the first decoder may be either identical or different models. For example, the second decoder and the first decoder may be different. The channel information outputted by the second decoder is original channel information, which includes M-dimensional (where M is an integer greater than or equal to 2) channel data, that is, M-dimensional information is adopted to represent the channel state; the channel information outputted by the first decoder is processed data information that has a mapping relationship with the original channel information, which includes N-dimensional (where N is an integer greater than or equal to 2) channel data, that is, N-dimensional information is adopted to represent the channel state. In this way, the first device can use the first decoder in cooperation with the encoder to obtain relevant data for CSI compressed feedback, and obtain performance monitoring metrics based on the relevant data.

In another implementation, the first model may include a model used for outputting a performance monitoring metric. For example, in a case where the first device is deployed with an encoder that outputs a bitstream based on channel information, and the second device is deployed with a decoder that outputs channel information based on the bitstream, the second device transmits the first data such that the first device can determine a performance monitoring model, which can output, based on local data of the first device, performance monitoring metrics such as precision and accuracy of the encoder and decoded (e.g., measurement data, or system performance metrics).

For ease of understanding, optional implementations of the first model will be described separately for wireless communication solutions based on dual-ended models (hereinafter referred to as dual-ended solutions) and for wireless communication solutions based on single-ended models.

For a dual-ended solution, if the first device uses a third model (where the third model is part of the dual-ended solution, and its implementation part also referred to as a third solution) and the second device uses a second model (where the second model is part of the dual-ended solution, and its implementation part also referred to as a second solution), the first data may be used for constructing the second solution/second model at the first device side, or constructing a solution/model with a similar function to the second solution/second model, or constructing a solution/model capable of outputting performance monitoring results. Consequently, the first device does not need to transmit a large amount of intermediate data or label data of performance monitoring to the second device to complete performance monitoring, and the second device also does not need to transmit an actually used second solution/second model to the first device. Instead, the second device enables the first device to complete the construction of a local performance monitoring model (the first model) by transmitting the first data. The local performance monitoring model may be a model having the same function as the model at the second device side or a model directly outputting performance monitoring results. For example, if the third solution/third model is an encoding solution/model used at the UE side, and the second solution is a decoding solution/model used at the network side, the first data is also used for constructing a decoding solution/model at the UE side, to assist in adaptive usage and performance monitoring of the encoding solution/model at the UE side. For example, the above performance monitoring model may be used for performance monitoring of the network-side CSI recovery solution at the UE side, or for performance monitoring of the network-side decoding solution at the UE side.

For a single-ended solution, if the second device uses a second solution/second model, the first data may be used for constructing the second solution/second model at the first device side, or constructing a solution/model with a similar function to the second solution/second model, or constructing a solution/model capable of outputting performance monitoring results. Consequently, the first device does not need to transmit a large amount of intermediate data or label data of performance monitoring to the network to complete performance monitoring. The second device also does not need to transmit an actually used second solution/second model, but instead, the second device enables the first device to complete the construction of a local performance monitoring model by transmitting the first data. The local performance monitoring model may be a model having the same function as the single-ended model at the second device side or a model directly outputting performance monitoring results. For example, if the second solution/second model is a beam prediction solution/model used at the network side, the first data is used for constructing a beam prediction solution/model at the UE side, to assist the UE side in directly obtaining performance monitoring results, without requiring frequent transmission of label data to complete performance monitoring of the network-side model. For example, the above performance monitoring model may be a performance monitoring model at the UE side for the network-side beam prediction solution, a performance monitoring model at the UE side for the network-side positioning solution, or the like.

In some embodiments, the first data is used to indicate the first model. For example, the first data may include parameters of the first model, such as structural parameters (e.g., the number of layers in a neural network and the number of neurons per layer), weight parameters, and bias information. In other words, the second device can directly indicate or transmit the first model to the first device.

In some embodiments, the first data includes second data and third data used for constructing the first model, where the second data includes input information of the first model, and the third data includes output information of the first model. In some descriptions, the above first data may also be referred to as sample data or training data, that is, the first data includes sample data used for constructing the first model, which includes input information and output information of the first model, and the first device can construct the first model based on the first data.

In some embodiments, before the first device receives the first data from the second device, the method further includes: transmitting, by the first device, first indication information to the second device; where the first indication information is used to indicate that the first device has a capability to determine the first model. Correspondingly, for the second device, before the second device transmits the first data to the first device, the method further includes: receiving, by the second device, the first indication information from the first device. The first indication information is used to indicate that the first device has the capability to determine the first model. Optionally, the second device can transmit the first data upon receiving the first indication information.

That is, the first device may report its capability to construct a local performance monitoring solution/model. In an example where the first device is a terminal device and the second device is a network device, the terminal device can transmit the first indication information via UE capability reporting, UE information reporting, an RRC message, UCI, or the like.

In some embodiments, before the first device receives the first data from the second device, the method further includes: transmitting, by the first device, second indication information to the second device. The second indication information is used to indicate the second device to transmit the first data. Correspondingly, for the second device, before the second device transmits the first data to the first device, the method further includes: receiving, by the second device, the second indication information from the first device. The second indication information is used to indicate the second device to transmit the first data.

That is, the first device may request/indicate/trigger the second device to transmit the first data to the first device. In an example where the first device is a terminal device and the second device is a network device, the terminal device may transmit the second indication information via UE capability reporting, UE information reporting, an RRC message, UCI, or the like. Correspondingly, the network device may respond to the request of the UE by indicating or transmitting the first data to the UE.

In some embodiments, before the first device receives the first data from the second device, the method further includes: transmitting, by the first device, third indication information to the second device, where the third indication information is used to indicate type information of the first data. Correspondingly, for the second device, before the second device transmits the first data to the first device, the method further includes: receiving, by the second device, the third indication information from the first device, where the third indication information is used to indicate the type information of the first data.

That is, the first device may indicate a type of the first data required by the first device to the second device, so that the second device can determine the first data and transmit the first data to the first device. In an example where the first device is a terminal device and the second device is a network device, the terminal device may transmit the third indication information via UE capability reporting, UE information reporting, an RRC message, UCI, or the like.

In some other embodiments, before the first device receives the first data from the second device, the method further includes: receiving, by the first device, third indication information from the second device, where the third indication information is used to indicate type information of the first data. Correspondingly, for the second device, before the second device transmits the first data to the first device, the method further includes: transmitting, by the second device, the third indication information to the first device, where the third indication information is used to indicate the type information of the first data.

That is, the type information of the first data may be indicated to the first device by the second device to enable the first device to accurately parse the first data. For example, in an example where the first device is a terminal device and the second device is a network device, the network device may transmit the third indication information via an RRC message, DCI, or the like.

In some embodiments, the type information includes at least one of:
an interface type,
a channel information type,
a measurement information type, or
a quantization information type.

For example, the interface type may be an interface size, an interface dimension, an interface associated with a specific transmission configuration, or an interface associated with a specific data type.

For example, in a case where the first data includes channel information, the type information indicated by the third indication information may include the channel information type, such as full channel information, a channel eigenvector, associated channel conditions, channel configuration. That is, the third indication information may be used to indicate what kind of channel information (e.g., the full channel information or the channel eigenvector) the first data is, and may also be used to indicate channel conditions and channel configurations associated with the first data.

For example, in a case where the first data includes measurement information, the type information indicated by the third indication information may include the measurement information type, e.g., a measurement type, or a type of measurement result such as reference signal receiving power (RSRP), reference signal receiving quality (RSRQ), received signal strength indication (RSSI).

For example, in a case where the first data includes quantization information, the type information indicated by the third indication information may include the quantization information type, such as the quantization manner, a quantization level, and quantization granularity.

It should be noted that in practical applications, the type information indicated by the third indication information may include one or more of the above types. For example, in a case where the first data includes channel information, the type information indicated by the third indication information may include the interface type and the channel information type. Alternatively, in a case where the first data includes channel information and measurement information, the type information indicated by the third indication information may include the channel information type and the measurement information type. In practical applications, the information indicated by the third indication information may be configured according to protocol agreements, system conventions, scenario requirements, or the like, and not all forms are enumerated here.

In some embodiments, before the first device receives the first data from the second device, the method further includes: transmitting, by the first device, fourth indication information to the second device, where the fourth indication information is used to indicate information related to application of the first model. Correspondingly, for the second device, before the second device transmits the first data to the first device, the method further includes: receiving, by the second device, the fourth indication information from the first device, where the fourth indication information is used to indicate the information related to the application of the first model.

That is, the first device may indicate to the second device the information related to the application of the first model. Here, the information related to the application of the first model may also be referred to as auxiliary information, condition information, or additional condition information related to the first model, and mainly refers to the solution type, scenario or conditions for the application of the first model. The transmission of the fourth indication information enables the second device to determine the model required by the first device, thereby determining the first data and transmitting the first data to the first device. Illustratively, in an example where the first device is a terminal device and the second device is a network device, the terminal device may transmit the fourth indication information via UE capability reporting, UE information reporting, an RRC message, UCI or the like.

In other embodiments, before the first device receives the first data from the second device, the method further includes: receiving, by the first device, fourth indication information from the second device; where the fourth indication information is used to indicate information related to application of the first model. Correspondingly, for the second device, before the second device transmits the first data to the first device, the method further includes: transmitting, by the second device, the fourth indication information to the first device, where the fourth indication information is used to indicate information related to the application of the first model.

That is, the information related to the application of the first model can be indicated by the second device to the first device. The transmission of the fourth indication information enables the first device to use, based on the information related to the application of the first model, the first model under the specific solution, scenario, or condition. For example, in an example where the first device is a terminal device and the second device is a network device, the network device may transmit the fourth indication information via an RRC message, DCI or the like.

In some embodiments, the information related to the application of the first model includes at least one of:
a solution type of the first task monitored by using the first model; or
an application scenario of the first model.

For example, the solution type of the first task may be the type of AL/ML model. Specifically, the solution type may be used to characterize the first model as a fully connected model, a convolutional neural network model, a recurrent neural network model, or the like.

For example, the application scenario of the first model includes velocity information, cell information, transmission configuration information, or the like. In other words, the application scenario of the first model may be determined based on one or more of the velocity information, the cell information, or the transmission configuration information, and different velocities, different cells, or different transmission configurations correspond to different application scenarios.

In some embodiments, before the first device receives the first data from the second device, the method further includes: transmitting, by the first device, fifth indication information to the second device; where the fifth indication information is used to indicate a data identifier (ID) associated with the first data, and the data ID is used by the second device to determine the first data. Correspondingly, for the second device, before the second device transmits the first data to the first device, the method further includes: receiving, by the second device, the fifth indication information from the first device; where the fifth indication information is used to indicate a data ID associated with the first data, and the data ID is used by the second device to determine the first data.

In the above embodiments, the data ID is associated with the first data. Specifically, it may mean that the data ID is associated with a specific data type, based on this, the second device can determine the first data according to the data ID. For example, different types of channel information may be associated with different IDs. When the fifth indication information indicates that the data ID is a first value, the second device can determine that the first data required by the first device is the channel information associated with the first value. The first device indicates the required first data to the second device in the form of a data ID, which may reduce transmission overhead.

In some other embodiments, before the first device receives the first data from the second device, the method further includes: receiving, by the first device, fifth indication information from the second device; where the fifth indication information is used to indicate a data ID associated with the first data, and the data ID is used by the first device to determine the first data. Correspondingly, for the second device, before the second device transmits the first data to the first device, the method further includes: transmitting, by the second device, the fifth indication information to the first device; where the fifth indication information is used to indicate a data ID associated with the first data, and the data ID is used by the first device to determine the first data.

In the above embodiment, the data ID associated with the first data is indicated by the second device to the first device. Based on this, the first device can determine the data type of the first data. In this way, the first device can extract the first data from the message carrying the first data upon receiving the message. In some scenarios, this makes it unnecessary to specifically transmit the first data, thereby reducing signaling overhead.

To facilitate understanding of the technical solutions in the embodiments of the present application, an application example of the performance monitoring method and the first data therein will be provided below. In the application example, the first device is a terminal device (UE), and the second device is a network device.

FIG. 8 is a schematic diagram of the application example. Specifically, in the application example, the performance monitoring method includes: indicating/transmitting, by the network device, the first data (or first data set) to the UE, and the first data is used by the UE to construct a performance monitoring model related to the first task.

In the application example, a CSI compressed feedback solution based on a dual-ended model is taken as an example of the first task, and a specific example of the first data is provided as follows.

The first data may consist of second data and third data. The second data is input information of the performance monitoring model, which may be, for example, channel information that has been processed (e.g., compressed, quantized), and may be in a specific form such as a bitstream of length N. The third data is output information of the performance monitoring model, which may be, for example, original channel information (meaning it is in the form of original data obtained through channel estimation) or processed channel information (also known as recovered channel information, i.e., channel information in another form that has a mapping relationship with the original channel information).

Specifically, for the third data, it may have the following forms.

The third data may be original channel information. A single sample of the original channel information consists of an M-dimensional channel data set. For example, when M is 2, the single sample of the original channel information is a 2-dimensional data set, which is a matrix with P first granularities in the first dimension and Q second granularities in the second dimension (i.e., the matrix is a P-by-Q matrix). P and Q may be equal or unequal, and the specific numerical values within the matrix indicate channel quality. As another example, when M is 3, a single sample of channel data is a 3-dimensional data set with P first granularities in the first dimension, Q second granularities in the second dimension, and R third granularities in the third dimension. P, Q, and R may be equal or unequal, and the specific numerical values within the three-dimensional data set indicate the channel quality. As yet another example, when M is 4, a single sample of channel data is a 4-dimensional data set with P first granularities in the first dimension, Q second granularities in the second dimension, R third granularities in the third dimension, and S fourth granularities in the fourth dimension. P, Q, R, and S may be equal or unequal, and the specific numerical values within the four-dimensional data set indicate the channel quality.

The above M-dimensional channel data set may include channel data/channel quality related to one or more of the following information. In other words, M dimensions may be used to represent one or more of the following information, which are listed as follows:
(1) Time-domain information, such as time information, delay information, the number of time-domain sampling points. The corresponding time-domain information granularity may be a specific time granularity, such as milliseconds or microseconds, or a time duration composed of a specific number of slots, half-frames, or frames.
(2) Frequency-domain information, such as frequency information, the number of frequency-domain sampling points. For example, a specific frequency granularity may be used as the frequency-domain information granularity.
(3) Spatial information, such as angle information, which specifically includes incident angle-angle information or other angle information. For example, a specific angle granularity may be used as the spatial information granularity.
(4) Antenna information, such as transmit antenna information, receive antenna information, pairing of transmit antennas and receive antennas. A specific granularity or a pairing granularity formed by a pairing manner between transmit antennas and receive antennas serves as the granularity of the antenna information.
(5) Data real and imaginary part information. For example, when the channel quality information is in the form of complex number, it is necessary to represent the complex number by separating the real part and imaginary part, the real part information and the imaginary part information may be used to represent the real part and the imaginary part of the channel information, respectively.

A specific example of the third data is illustrated in FIG. 9. In this example, M=3, meaning that the channel data consists of information in three dimensions: time-domain information p, spatial information q, and real and imaginary part information.

The third data may also be processed channel information obtained by applying specific processing on the original channel information. A single sample of the processed channel information consists of an M-dimensional data set, and data within the data set includes processed data obtained by applying specific processing on the original channel information. For example, when M is 2, a single sample of the processed channel information is a 2-dimensional processed data set, which is a matrix with P first granularities in the first dimension and Q second granularities in the second dimension. P and Q may be equal or unequal, and the specific numerical values within the matrix indicate processed data representing the channel quality. As another example, when M is 3, a single sample of the processed channel information is a 3-dimensional data set with P first granularities in the first dimension, Q second granularities in the second dimension, and R third granularities in the third dimension. P, Q, and R may be equal or unequal, and the specific numerical values within the three-dimensional set indicate the processed data representing the channel quality.

The above M-dimensional channel data set may include channel data/channel quality related to one or more of the following information. In other words, M dimensions may be used to represent one or more of the following information, which are listed as follows:
(1) Processed channel information (i.e., processed data) of a specific size obtained by applying a specific mathematical transformation to the channel information, such as processed channel information obtained through methods like eigen decomposition or vector space mapping.
(2) Time-domain information.
(3) Frequency-domain information.
(4) Spatial information.
(5) Antenna information.
(6) Data real and imaginary part information.

Here, the specifics of the time-domain information, frequency-domain information, spatial information, antenna information, and data real and imaginary part information are as described above, which will not be repeated here.

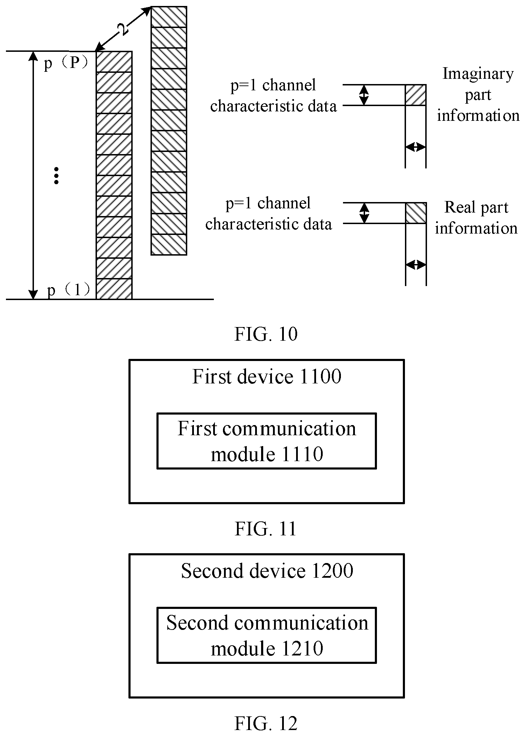

A specific example of the third data is illustrated in FIG. 10. In this example, M=2, meaning that the processed channel information consists of information in two dimensions, which includes a channel eigenvector of length P obtained through processing, and the real and imaginary part information of the eigenvector.

It can be seen that the form of the first data described above is different from the form of data that needs to be transmitted in model performance monitoring in relevant technologies. The beneficial effects of the embodiments of the present application are primarily intended to ensure the construction of a local performance monitoring model at the first device through the indication or transmission of the first data. On one hand, this circumvents privacy protection and model privatization issues caused by the peer second device directly transmitting the actually used model to the first device. On the other hand, this also circumvents the large amount of data reporting and label reporting required for performance monitoring at the second device side, as well as the corresponding transmission and signaling overhead. Specifically, in the embodiments of the present application, based on the indication or transmission of the first data, the first device can locally construct a performance monitoring model equivalent to the model actually used by the second device, thereby enabling more flexible and on-demand utilization of the results of the performance monitoring model to achieve local performance monitoring.

FIG. 11 is a schematic block diagram illustrating a first device 1100 according to an embodiment of this application. The first device 1100 may include:
a first communication module 1110, configured to receive first data from a second device; where the first data is used to determine a first model, and the first model is used to perform performance monitoring related to a first task.

In an implementation, the first task includes a wireless communication solution based on a second model in the second device.

In an implementation, the wireless communication solution is implemented based on the second device using the second model.

In an implementation, the wireless communication solution is implemented based on the first device using a third model and the second device using the second model.

In an implementation, the first model includes a model having the same function as the second model, and/or a model for outputting a performance monitoring metric.

In an implementation, the first data is used to indicate the first model.

In an implementation, the first data includes second data and third data used for constructing the first model, the second data includes input information of the first model, and the third data includes output information of the first model.

In an implementation, the first communication module 1110 is further configured to:
transmit first indication information to the second device; where the first indication information is used to indicate that the first device has a capability to determine the first model.

In an implementation, the first communication module 1110 is further configured to:
transmit second indication information to the second device; where the second indication information is used to indicate the second device to transmit the first data.

In an implementation, the first communication module 1110 is further configured to:
transmit third indication information to the second device; where the third indication information is used to indicate type information of the first data.

In an implementation, the first communication module 1110 is further configured to:
receive third indication information from the second device; where the third indication information is used to indicate type information of the first data.

In an implementation, the type information includes at least one of:
an interface type;
a channel information type;
a measurement information type; or
a quantization information type.

In an implementation, the first communication module 1110 is further configured to:
transmit fourth indication information to the second device; where the fourth indication information is used to indicate information related to application of the first model.

In an implementation, the first communication module 1110 is further configured to:
receive fourth indication information from the second device; where the fourth indication information is used to indicate information related to the application of the first model.

In an implementation, the information related to the application of the first model includes at least one of:
a solution type of the first task monitored using the first model; or
an application scenario of the first model.

In an implementation, the first communication module 1110 is further configured to:
transmit fifth indication information to the second device; where the fifth indication information is used to indicate a data identifier (ID) associated with the first data; and the data ID is used by the second device to determine the first data.

In an implementation, the first communication module 1110 is further configured to:
receive fifth indication information from the second device; where the fifth indication information is used to indicate a data ID associated with the first data; and the data ID is used by the first device to determine the first data.

The first device 1100 in the embodiments of the present application may implement the corresponding functions of the first device in the above method embodiments. The processes, functions, implementation methods, and beneficial effects corresponding to each module (sub-module, unit, component, or the like) in the first device 1100 may be found in the corresponding description in the above method embodiments, which will not be repeated here. It should be noted that the functions described in each module (sub-module, unit, component, or the like) in the first device 1100 in the embodiments of the application may be implemented by different modules (sub-modules, units, components, or the like) or by the same module (sub-module, unit, component, or the like).

FIG. 12 is a schematic block diagram illustrating a second device 1200 according to an embodiment of the present application. The second device 1200 may include:
a second communication module 1210, configured to transmit first data to a first device; where the first data is used by the first device to determine a first model, and the first model is used by the first device to perform performance monitoring related to a first task.

In an implementation, the first task includes a wireless communication solution based on a second model in the second device.

In an implementation, the wireless communication solution is implemented based on the second device using the second model.

In an implementation, the wireless communication solution is implemented based on the first device using a third model and the second device using the second model.

In an implementation, the first model includes a model having the same function as the second model, and/or a model used for outputting a performance monitoring metric.

In an implementation, the first data is used to indicate the first model.

In an implementation, the first data includes second data and third data used for constructing the first model, the second data includes input information of the first model, and the third data includes output information of the first model.

In an implementation, the second communication module 1210 is further configured to:
receive first indication information from the first device; where the first indication information is used to indicate that the first device has a capability to determine the first model.

In an implementation, the second communication module 1210 is further configured to:
receive second indication information from the first device; where the second indication information is used to instruct the second device to transmit the first data.

In an implementation, the second communication module 1210 is further configured to:
receive third indication information from the second device; where the third indication information is used to indicate type information of the first data.

In an implementation, the second communication module 1210 is further configured to:
transmit third indication information to the first device; where the third indication information is used to indicate type information of the first data.

In an implementation, the type information includes at least one of:
an interface type;
a channel information type;
a measurement information type; or
a quantization information type.

In an implementation, the second communication module 1210 is further configured to:
receive fourth indication information from the first device; where the fourth indication information is used to indicate information related to application of the first model.

In an implementation, the second communication module 1210 is further configured to:
transmit fourth indication information to the first device; where the fourth indication information is used to indicate information related to application of the first model.

In an implementation, the information related to the application of the first model includes at least one of:
a solution type of the first task monitored by using the first model; or
an application scenario of the first model.

In an implementation, the second communication module 1210 is further configured to:
receive fifth indication information from the first device; where the fifth indication information is used to indicate a data identifier (ID) associated with the first data, and the data ID is used by the second device to determine the first data.

In an implementation, the second communication module 1210 is further configured to:
transmit fifth indication information to the first device; where the fifth indication information is used to indicate a data ID associated with the first data, and the data ID is used by the first device to determine the first data.

The second device 1200 in the embodiments of the present application may implement the corresponding functions of the first device in the above method embodiments. The processes, functions, implementation methods, and beneficial effects corresponding to each module (sub-module, unit, component, or the like) in the second device 1200 may be found in the corresponding description in the above method embodiments, which will not be repeated here. It should be noted that the functions described in each module (sub-module, unit, component, or the like) in the second device 1200 in the embodiments of the application may be implemented by different modules (sub-modules, units, components, or the like) or by the same module (sub-module, unit, component, or the like)

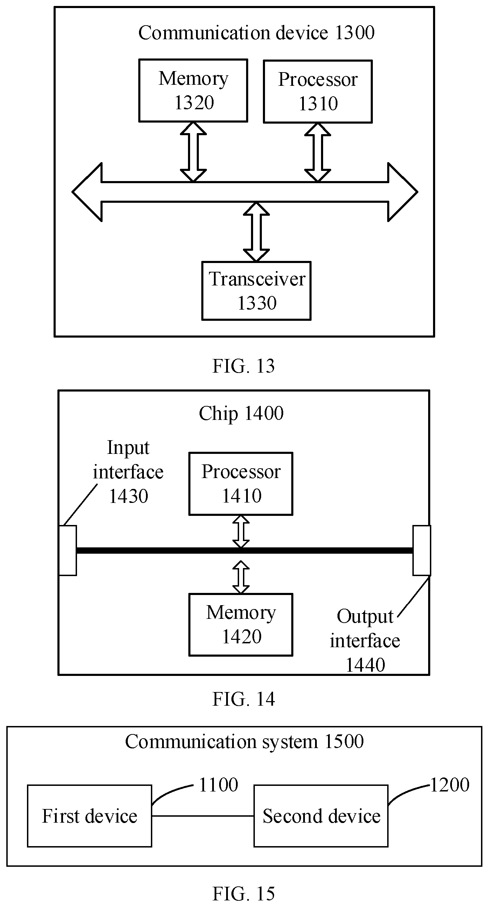

FIG. 13 is a schematic structural diagram illustrating a communication device 1300 according to the embodiments of the present application. The communication device 1300 includes a processor 1310. The processor 1310 may call a computer program from a memory and run the computer program, to enable the communication device 1300 to implement the methods in the embodiments of the present application.

In an implementation, the communication device 1300 may further include a memory 1320. The processor 1310 may call a computer program from the memory 1320 and run the computer program, to enable the communication device 1300 to implement the methods in the embodiments of the present application.

The memory 1320 may be a separate device independent of the processor 1310, or may be integrated into the processor 1310.

In an implementation, the communication device 1300 may further include a transceiver 1330, and the processor 1310 may control the transceiver 1330 to communicate with other devices. Specifically, the transceiver 1330 may transmit information or data to other devices, or receive information or data transmitted by other devices.

The transceiver 1330 may include a transmitter and a receiver. The transceiver 1330 may further include an antenna(s), and the number of antenna(s) may be one or more.

In an implementation, the communication device 1300 may be the second device in the embodiments of the present application, and the communication device 1300 may implement the corresponding processes implemented by the second device in each method in the embodiments of the present application, which will not be repeated here for the sake of brevity.

In an implementation, the communication device 1300 may be the first device in the embodiments of the present application, and the communication device 1300 may implement the corresponding processes implemented by the first device in each method in the embodiments of the present application, which will not be repeated here for the sake of brevity.

FIG. 14 is a schematic structural diagram illustrating a chip 1400 according to the embodiments of the present application. The chip 1400 includes a processor 1410, which may call a computer program from a memory and run the computer program, to implement the methods in the embodiments of the present application.

In an implementation, the chip 1400 may further include a memory 1420. The processor 1410 may call a computer program from the memory 1420 and run the computer program, to implement the methods performed by the first device or the second device in the embodiments of the present application.

The memory 1420 may be a separate device independent of the processor 1410, or may be integrated into the processor 1410.

In an implementation, the chip 1400 may further include an input interface 1430. The processor 1410 may control the input interface 1430 to communicate with other devices or chips, and specifically, may obtain information or data transmitted by other devices or chips.

In an implementation, the chip 1400 may further include an output interface 1440. The processor 1410 may control the output interface 1440 to communicate with other devices or chips, and specifically, may output information or data to other devices or chips.

In an implementation, the chip may be applied to the first device in the embodiments of the present application, and the chip may implement the corresponding processes implemented by the first device in each method in the embodiments of the present application, which will not be repeated here for the sake of brevity.

In an implementation, the chip may be applied to the second device in the embodiments of the present application, and the chip may implement the corresponding processes implemented by the second device in each method in the embodiments of the present application, which will not be repeated here for the sake of brevity.

The chips applied to the first device and the second device may be the same chip or different chips.

It should be understood that the chip mentioned in the embodiments of the present application may also be referred to as a system-level chip, a system-on-chip, a chip system, a system-on-chip, or the like.

The processor mentioned above may be a general purpose processor, a digital signal processor (DSP), a field programmable gate array (FPGA), an application specific integrated circuit (ASIC), or another programmable logic device, a transistor logic device, a discrete hardware component, or the like. The general purpose processor mentioned above may be a microprocessor, any conventional processor, or the like.

The memory mentioned above may be a volatile memory or a non-volatile memory, or may include both the volatile and non-volatile memory. Here, the non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not a limited illustration. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch-link DRAM (SLDRAM), a direct rambus RAM (DR RAM), or the like. That is, the memory in the embodiments of the present application is intended to include, but is not limited to, these and any other suitable types of memories.

FIG. 15 is a schematic block diagram of a communication system 1500 according to the embodiments of the present application. The communication system 1500 includes the first device 1100 and the second device 1200.

The first device 1100 receives first data from the second device 1200; where the first data is used by the first device 1100 to determine a first model, and the first model is used by the first device 1100 to perform performance monitoring related to a first task.

The second device 1200 transmits first data to the first device 1100; where the first data is used by the first device 1100 to determine a first model, and the first model is used by the first device 1100 to perform performance monitoring related to a first task.

The first device 1100 may be used to implement the corresponding functions implemented by the first device in the above methods, and the second device 1200 may be used to implement the corresponding functions implemented by the second device in the above methods, which will not be repeated here for the sake of brevity.

In the above embodiments, all or part of the above embodiments may be implemented by software, hardware, firmware or any combination thereof. When implemented using software, all or part of the above embodiments may be implemented in a form of a computer program product. The computer program product includes one or more computer instructions. When the computer program instructions are loaded and executed on a computer, the process or the function described in the embodiments of the present application is generated in all or part. The computer may be a general purpose computer, a special purpose computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center through wired method (e.g., coaxial cable, optical fiber, or digital subscriber line (DSL)) or wireless method (e.g., infrared, radio, or microwave). The computer-readable storage medium may be any available medium that is capable of being read by the computer or a data storage device containing one or more available media integrated together, such as a server or a data center. The available medium may be a magnetic medium (e.g., a floppy disk, a hard disk, a magnetic tape), an optical medium (e.g., DVD), a semiconductor medium (e.g., a solid state disk (SSD)), or the like.

It should be understood that in the various embodiments of the present application, the magnitude of the serial numbers of the above processes does not indicate an execution order. The execution order of each process should be determined by its function and internal logic, and should not constitute any limitation on the implementation process of the embodiments of the present application.

Those skilled in the art will clearly understand that, for the convenience and brevity of description, the specific working processes of the systems, apparatuses and units described above may refer to the corresponding processes in the above method embodiments, which will not be repeated here.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A performance monitoring method, comprising:
receiving, by a first device, first data from a second device; wherein the first data is used by the first device to determine a first model, and the first model is used by the first device to perform performance monitoring related to a first task.

2. The method according to claim 1, wherein the first task comprises a wireless communication solution based on a second model in the second device.

3. The method according to claim 2, wherein the wireless communication solution is implemented based on the second device using the second model.

4. The method according to claim 2, wherein the wireless communication solution is implemented based on the first device using a third model and the second device using the second model.

5. The method according to any one of claims 2 to 4, wherein the first model comprises a model having the same function as the second model and/or a model used for outputting a performance monitoring metric.

6. The method according to any one of claims 1 to 5, wherein the first data is used to indicate the first model.

7. The method according to any one of claims 1 to 5, wherein the first data comprises second data and third data used for constructing the first model, the second data comprises input information of the first model, and the third data comprises output information of the first model.

8. The method according to any one of claims 1 to 7, wherein before receiving, by the first device, the first data from the second device, the method further comprises:
transmitting, by the first device, first indication information to the second device; wherein the first indication information is used to indicate that the first device has a capability to determine the first model.

9. The method according to any one of claims 1 to 8, wherein before receiving, by the first device, the first data from the second device, the method further comprises:
transmitting, by the first device, second indication information to the second device; wherein the second indication information is used to indicate the second device to transmit the first data.

10. The method according to any one of claims 1 to 9, wherein before receiving, by the first device, the first data from the second device, the method further comprises:
transmitting, by the first device, third indication information to the second device; wherein the third indication information is used to indicate type information of the first data.

11. The method according to any one of claims 1 to 9, wherein before receiving, by the first device, the first data from the second device, the method further comprises:
receiving, by the first device, third indication information from the second device; wherein the third indication information is used to indicate type information of the first data.

12. The method according to claim 10 or 11, wherein the type information comprises at least one of:
an interface type;
a channel information type;
a measurement information type; or
a quantization information type.

13. The method according to any one of claims 1 to 12, wherein before receiving, by the first device, the first data from the second device, the method further comprises:
transmitting, by the first device, fourth indication information to the second device; wherein the fourth indication information is used to indicate information related to application of the first model.

14. The method according to any one of claims 1 to 12, wherein before receiving, by the first device, the first data from the second device, the method further comprises:
receiving, by the first device, fourth indication information from the second device; wherein the fourth indication information is used to indicate information related to application of the first model.

15. The method according to claim 13 or 14, wherein the information related to the application of the first model comprises at least one of:
a solution type of the first task monitored by using the first model; or
an application scenario of the first model.

16. The method according to any one of claims 1 to 15, wherein before receiving, by the first device, the first data from the second device, the method further comprises:
transmitting, by the first device, fifth indication information to the second device; wherein the fifth indication information is used to indicate a data identifier (ID) associated with the first data, and the data ID is used by the second device to determine the first data.

17. The method according to any one of claims 1 to 15, wherein before receiving, by the first device, the first data from the second device, the method further comprises:
receiving, by the first device, fifth indication information from the second device; wherein the fifth indication information is used to indicate a data ID associated with the first data, and the data ID is used by the first device to determine the first data.

18. A performance monitoring method, comprising:
transmitting, by a second device, first data to a first device; wherein the first data is used by the first device to determine a first model, and the first model is used by the first device to perform performance monitoring related to a first task.

19. The method according to claim 18, wherein the first task comprises a wireless communication solution based on a second model in the second device.

20. The method according to claim 19, wherein the wireless communication solution is implemented based on the second device using the second model.

21. The method according to claim 19, wherein the wireless communication solution is implemented based on the first device using a third model and the second device using the second model.

22. The method according to any one of claims 19 to 21, wherein the first model comprises a model having the same function as the second model, and/or a model used for outputting a performance monitoring metric.

23. The method according to any one of claims 18 to 22, wherein the first data is used to indicate the first model.

24. The method according to any one of claims 18 to 22, wherein the first data comprises second data and third data used for constructing the first model, the second data comprises input information of the first model, and the third data comprises output information of the first model.

25. The method according to any one of claims 18 to 24, wherein before transmitting, by the second device, the first data to the first device, the method further comprises:
receiving, by the second device, first indication information from the first device; wherein the first indication information is used to indicate that the first device has a capability to determine the first model.

26. The method according to any one of claims 18 to 25, wherein before transmitting, by the second device, the first data to the first device, the method further comprises:
receiving, by the second device, second indication information from the first device; wherein the second indication information is used to indicate the second device to transmit the first data.

27. The method according to any one of claims 18 to 26, wherein before transmitting, by the second device, the first data to the first device, the method further comprises:
receiving, by the second device, third indication information from the second device; wherein the third indication information is used to indicate type information of the first data.

28. The method according to any one of claims 18 to 26, wherein before transmitting, by the second device, the first data to the first device, the method further comprises:
transmitting, by the second device, third indication information to the first device; wherein the third indication information is used to indicate type information of the first data.

29. The method according to claim 27 or 28, wherein the type information comprises at least one of:
an interface type;
a channel information type;
a measurement information type; or
a quantization information type.

30. The method according to any one of claims 18 to 29, wherein before transmitting, by the second device, the first data to the first device, the method further comprises:
receiving, by the second device, fourth indication information from the first device; wherein the fourth indication information is used to indicate information related to application of the first model.

31. The method according to any one of claims 18 to 29, wherein before transmitting, by the second device, the first data to the first device, the method further comprises:
transmitting, by the second device, fourth indication information to the first device; wherein the fourth indication information is used to indicate information related to application of the first model.

32. The method according to claim 30 or 31, wherein the information related to the application of the first model comprises at least one of:
a solution type of the first task monitored by using the first model; or
an application scenario of the first model.

33. The method according to any one of claims 18 to 32, wherein before transmitting, by the second device, the first data to the first device, the method further comprises:
receiving, by the second device, fifth indication information from the first device; wherein the fifth indication information is used to indicate a data identifier (ID) associated with the first data, and the data ID is used by the second device to determine the first data.

34. The method according to any one of claims 18 to 32, wherein before transmitting, by the second device, the first data to the first device, the method further comprises:
transmitting, by the second device, fifth indication information to the first device; wherein the fifth indication information is used to indicate a data ID associated with the first data, and the data ID is used by the first device to determine the first data.

35. A first device, comprising:
a first communication module, configured to receive first data from a second device; wherein the first data is used to determine a first model, and the first model is used to perform performance monitoring related to a first task.

36. The first device according to claim 35, wherein the first task comprises a wireless communication solution based on a second model in the second device.

37. The first device according to claim 36, wherein the wireless communication solution is implemented based on the second device using the second model.

38. The first device according to claim 36, wherein the wireless communication solution is implemented based on the first device using a third model and the second device using the second model.

39. The first device according to any one of claims 36 to 38, wherein the first model comprises a model having the same function as the second model and/or a model used for outputting a performance monitoring metric.

40. The first device according to any one of claims 35 to 39, wherein the first data is used to indicate the first model.

41. The first device according to any one of claims 35 to 39, wherein the first data comprises second data and third data used for constructing the first model, the second data comprises input information of the first model, and the third data comprises output information of the first model.

42. The first device according to any one of claims 35 to 41, wherein the first communication module is further configured to:
transmit first indication information to the second device; wherein the first indication information is used to indicate that the first device has a capability to determine the first model.

43. The first device according to any one of claims 35 to 42, wherein the first communication module is further configured to:
transmit second indication information to the second device; wherein the second indication information is used to indicate the second device to transmit the first data.

44. The first device according to any one of claims 35 to 43, wherein the first communication module is further configured to:
transmit third indication information to the second device, wherein the third indication information is used to indicate type information of the first data.

45. The first device according to any one of claims 35 to 43, wherein the first communication module is further configured to:
receive third indication information from the second device; wherein the third indication information is used to indicate type information of the first data.

46. The first device according to claim 44 or 45, wherein the type information comprises at least one of:
an interface type;
a channel information type;
a measurement information type; or
a quantization information type.

47. The first device according to any one of claims 35 to 46, wherein the first communication module is further configured to:
transmit fourth indication information to the second device, wherein the fourth indication information is used to indicate information related to application of the first model.

48. The first device according to any one of claims 35 to 46, wherein the first communication module is further configured to:
receive fourth indication information from the second device; wherein the fourth indication information is used to indicate information related to application of the first model.

49. The first device according to claim 47 or 48, wherein the information related to the application of the first model comprises at least one of:
a solution type of the first task monitored by using the first model; or
an application scenario of the first model.

50. The first device according to any one of claims 35 to 49, wherein the first communication module is further configured to:
transmit fifth indication information to the second device; wherein the fifth indication information is used to indicate a data identifier (ID) associated with the first data, and the data ID is used by the second device to determine the first data.

51. The first device according to any one of claims 35 to 49, wherein the first communication module is further configured to:
receive fifth indication information from the second device; wherein the fifth indication information is used to indicate a data ID associated with the first data, and the data ID is used by the first device to determine the first data.

52. A second device, comprising:
a second communication module, configured to transmit first data to a first device; wherein the first data is used by the first device to determine a first model, and the first model is used by the first device to perform performance monitoring related to a first task.

53. The second device according to claim 52, wherein the first task comprises a wireless communication solution based on a second model in the second device.

54. The second device according to claim 53, wherein the wireless communication solution is implemented based on the second device using the second model.

55. The second device according to claim 53, wherein the wireless communication solution is implemented based on the first device using a third model and the second device using the second model.

56. The second device according to any one of claims 53 to 55, wherein the first model comprises a model having the same function as the second model and/or a model used for outputting a performance monitoring metric.

57. The second device according to any one of claims 52 to 56, wherein the first data is used to indicate the first model.

58. The second device according to any one of claims 52 to 56, wherein the first data comprises second data and third data used for constructing the first model, the second data comprises input information of the first model, and the third data comprises output information of the first model.

59. The second device according to any one of claims 52 to 59, wherein the second communication module is further configured to:
receive first indication information from the first device; wherein the first indication information is used to indicate that the first device has a capability to determine the first model.

60. The second device according to any one of claims 52 to 59, wherein the second communication module is further configured to:
receive second indication information from the first device; wherein the second indication information is used to indicate the second device to transmit the first data.

61. The second device according to any one of claims 52 to 60, wherein the second communication module is further configured to:
receive third indication information from the second device; wherein the third indication information is used to indicate type information of the first data.

62. The second device according to any one of claims 52 to 60, wherein the second communication module is further configured to:
transmit third indication information to the first device; wherein the third indication information is used to indicate type information of the first data.

63. The second device according to claim 61 or 62, wherein the type information comprises at least one of:
an interface type;
a channel information type;
a measurement information type; or
a quantization information type.

64. The second device according to any one of claims 52 to 63, wherein the second communication module is further configured to:
receive fourth indication information from the first device; wherein the fourth indication information is used to indicate information related to application of the first model.

65. The second device according to any one of claims 52 to 63, wherein the second communication module is further configured to:
transmit fourth indication information to the first device; wherein the fourth indication information is used to indicate information related to application of the first model.

66. The second device according to claim 64 or 65, wherein the information related to the application of the first model comprises at least one of:
a solution type of the first task monitored by using the first model; or
an application scenario of the first model.

67. The second device according to any one of claims 52 to 66, wherein the second communication module is further configured to:
receive fifth indication information from the first device; wherein the fifth indication information is used to indicate a data identifier (ID) associated with the first data, and the data ID is used by the second device to determine the first data.

68. The second device according to any one of claims 52 to 66, wherein the second communication module is further configured to:
transmit fifth indication information to the first device; wherein the fifth indication information is used to indicate a data ID associated with the first data, and the data ID is used by the first device to determine the first data.

69. A first device, comprising: a transceiver, a processor, and a memory, wherein the memory is configured to store a computer program, the transceiver is configured to communicate with other devices, and the processor is configured to call the computer program stored in the memory and run the computer program to enable the first device to receive first data from a second device; wherein the first data is used by the first device to determine a first model, and the first model is used by the first device to perform performance monitoring related to a first task.

70. The first device according to claim 69, wherein the first task comprises a wireless communication solution based on a second model in the second device.

71. The first device according to claim 70, wherein the wireless communication solution is implemented based on the second device using the second model.

72. The first device according to claim 70, wherein the wireless communication solution is implemented based on the first device using a third model and the second device using the second model.

73. The first device according to any one of claims 70 to 72, wherein the first model comprises a model having the same function as the second model and/or a model used for outputting a performance monitoring metric.

74. The first device according to any one of claims 69 to 73, wherein the first data is used to indicate the first model.

75. The first device according to any one of claims 69 to 73, wherein the first data comprises second data and third data used for constructing the first model, the second data comprises input information of the first model, and the third data comprises output information of the first model.

76. The first device according to any one of claims 69 to 75, wherein the processor is further configured to enable the first device to perform:
transmitting first indication information to the second device; wherein the first indication information is used to indicate that the first device has a capability to determine the first model.

77. The first device according to any one of claims 69 to 76, wherein the processor is further configured to enable the first device to perform:
transmitting second indication information to the second device; wherein the second indication information is used to indicate the second device to transmit the first data.

78. The first device according to any one of claims 69 to 77, wherein the processor is further configured to enable the first device to perform:
transmitting third indication information to the second device; wherein the third indication information is used to indicate type information of the first data.

79. The first device according to any one of claims 69 to 77, wherein the processor is further configured to enable the first device to perform:
receiving third indication information from the second device; wherein the third indication information is used to indicate type information of the first data.

80. The first device according to claim 78 or 79, wherein the type information comprises at least one of:
an interface type;
a channel information type;
a measurement information type; or
a quantization information type.

81. The first device according to any one of claims 69 to 80, wherein the processor is further configured to enable the first device to perform:
transmitting fourth indication information to the second device; wherein the fourth indication information is used to indicate information related to application of the first model.

82. The first device according to any one of claims 69 to 80, wherein the processor is further configured to enable the first device to perform:
receiving fourth indication information from the second device; wherein the fourth indication information is used to indicate information related to application of the first model.

83. The first device according to claim 81 or 82, wherein the information related to the application of the first model comprises at least one of:
a solution type of a first task monitored by using the first model; or
an application scenario of the first model.

84. The first device according to any one of claims 69 to 83, wherein the processor is further configured to enable the first device to perform:
transmitting fifth indication information to the second device; wherein the fifth indication information is used to indicate a data identifier (ID) associated with the first data, and the data ID is used by the second device to determine the first data.

85. The first device according to any one of claims 69 to 83, wherein the processor is further configured to enable the first device to perform:
receiving fifth indication information from the second device; wherein the fifth indication information is used to indicate a data ID associated with the first data, and the data ID is used by the first device to determine the first data.

86. A second device, comprising: a transceiver, a processor, and a memory, wherein the memory is configured to store a computer program, the transceiver is configured to communicate with other devices, and the processor is configured to call the computer program stored in the memory and run the computer program to enable the second device to transmit first data to a first device; wherein the first data is used by the first device to determine a first model, and the first model is used by the first device to perform performance monitoring related to a first task.

87. The second device according to claim 86, wherein the first task comprises a wireless communication solution based on a second model in the second device.

88. The second device according to claim 87, wherein the wireless communication solution is implemented based on the second device using the second model.

89. The second device according to claim 87, wherein the wireless communication solution is implemented based on the first device using a third model and the second device using the second model.

90. The second device according to any one of claims 87 to 89, wherein the first model comprises a model having the same function as the second model and/or a model used for outputting a performance monitoring metric.

91. The second device according to any one of claims 86 to 90, wherein the first data is used to indicate the first model.

92. The second device according to any one of claims 86 to 90, wherein the first data comprises second data and third data used for constructing the first model, the second data comprises input information of the first model, and the third data comprises output information of the first model.

93. The second device according to any one of claims 86 to 92, wherein the processor is further configured to enable the second device to perform:
receiving first indication information from the first device; wherein the first indication information is used to indicate that the first device has a capability to determine the first model.

94. The second device according to any one of claims 86 to 93, wherein the processor is further configured to enable the second device to perform:
receiving second indication information from the first device; wherein the second indication information is used to indicate the second device to transmit the first data.

95. The second device according to any one of claims 86 to 94, wherein the processor is further configured to enable the second device to perform:
receiving third indication information from the second device; wherein the third indication information is used to indicate type information of the first data.

96. The second device according to any one of claims 86 to 94, wherein the processor is further configured to enable the second device to perform:
transmitting third indication information to the first device; wherein the third indication information is used to indicate type information of the first data.

97. The second device according to claim 95 or 96, wherein the type information comprises at least one of:
an interface type;
a channel information type;
a measurement information type; or
a quantization information type.

98. The second device according to any one of claims 86 to 97, wherein the processor is further configured to enable the second device to perform:
receiving fourth indication information from the first device; wherein the fourth indication information is used to indicate information related to application of the first model.

99. The second device according to any one of claims 86 to 97, wherein the processor is further configured to enable the second device to perform:
transmitting fourth indication information to the first device; wherein the fourth indication information is used to indicate information related to application of the first model.

100. The second device according to claim 98 or 99, wherein the information related to the application of the first model comprises at least one of:
a solution type of a first task monitored by using the first model; or
an application scenario of the first model.

101. The second device according to any one of claims 86 to 100, wherein the processor is further configured to enable the second device to perform:
receiving fifth indication information from the first device; wherein the fifth indication information is used to indicate a data identifier (ID) associated with the first data, and the data ID is used by the second device to determine the first data.

102. The second device according to any one of claims 86 to 100, wherein the processor is further configured to enable the second device to perform:
transmitting fifth indication information to the first device; wherein the fifth indication information is used to indicate a data ID associated with the first data, and the data ID is used by the first device to determine the first data.

103. A chip, comprising: a processor, configured to call a computer program from a memory and run the computer program to enable a device equipped with the chip to perform the method according to any one of claims 1 to 17.

104. A chip, comprising: a processor, configured to call a computer program from a memory and run the computer program to enable a device equipped with the chip to perform the method according to any one of claims 18 to 34.

105. A computer-readable storage medium, configured to store a computer program; wherein the computer program, when executed by a device, enables the device to perform the method according to any one of claims 1 to 17.

106. A computer-readable storage medium, configured to store a computer program; wherein the computer program, when executed by a device, enables the device to perform the method according to any one of claims 18 to 34.

107. A computer program product, comprising computer program instructions, wherein the computer program instructions enable a computer to perform the method according to any one of claims 1 to 17.

108. A computer program product, comprising computer program instructions, wherein the computer program instructions enable a computer to perform the method according to any one of claims 18 to 34.

109. A computer program, wherein the computer program enables a computer to perform the method according to any one of claims 1 to 17.

110. A computer program, wherein the computer program enables a computer to perform the method according to any one of claims 18 to 34.

111. A communication system, comprising:
a first device, configured to perform the method according to any one of claims 1 to 17; and
a second device, configured to perform the method according to any one of claims 18 to 34.
